# EUROPÄISCHE PATENTANMELDUNG

(11) **EP 1 180 502 A2**
(43) Veröffentlichungstag der Anmeldung: **20.02.2002**
(21) Anmeldenummer: 01119510.4
(22) Anmeldetag: 14.08.2001
(51) Int. Cl.: C04B 7/42, C04B 7/44

(54) **Verfahren zur Steuerung von endothermischen chemischen Reaktionen**

(30) Priorität: 14.08.2000 DE 10039934
(71) Anmelder: EIRO Rohstoffgesellschaft mbH, 50181 Bedburg (DE)
(72) Erfinder: Eiselt, Hartmut M., 50181 Bedburg (DE)
(74) Vertreter: Paul, Dieter-Alfred, Dipl.-Ing.

(57) **Zusammenfassung**

Die Erfindung beschreibt ein Verfahren zur Steuerung von endothermischen chemischen Reaktionen, bei dem die Wärme für die Reaktion durch Verbrennung von Sekundärbrennstoffen erzeugt wird, welches dadurch gekennzeichnet ist, daß Sekundärbrennstoffe verwendet werden, die einen Teil der Ausgangsstoffe für die Reaktion enthalten und diese bei der Verbrennung freisetzen.

## Beschreibung

Die vorliegende Erfindung betrifft ein Verfahren zur Steuerung von endothermischen chemischen Reaktionen, bei dem die Wärme für die Reaktion durch Verbrennung von Sekundärbrennstoffen zur Verfügung gestellt wird. Insbesondere befaßt sich die Erfindung mit Prozeßabläufen bei der Herstellung von Zement.

Zement wird im wesentlichen aus Kalkstein als Hauptkomponente sowie Ton und Sand als weitere Rohstoffkomponenten hergestellt. Diese Rohmaterialien werden im Zementwerk üblicherweise in gebrochener Form und getrennt voneinander in Silogruppen gelagert, aus denen sie zur weiteren Verwendung in über Rechner gesteuerter Dosierung abgezogen und Mühlwerken zugeführt werden können. In diesen Mühlwerken, die beispielsweise als Einkammer-Rohrmühlen mit Vorzerkleinerung ausgeführt sind, wird das Rohmaterial aus Kalkstein, Ton und Sand mit Ofenabwärme getrocknet und auf Mehlfeinheit gemahlen. In Mischsilos erfolgt anschließend eine intensive Homogenisierung des Rohmehls, die eine Voraussetzung für eine konstante Zementqualität ist. Von diesen Mischsilos gelangt das Rohmehl gegebenenfalls nach Zwischenlagerung in einem Vorratssilo in eine Ofenanlage, wo das Ofenmehl bei Temperaturen um 1450°C zu Zementklinker gebrannt wird.

Die Befeuerung der Öfen, die in der Regel als Drehofenanlage bzw. Drehtrommelöfen ausgebildet sind, erfolgt mit Primärbrennstoffen beispielsweise Braunkohlenstaub. Der hierfür erforderliche Energieaufwand ist vergleichsweise hoch. Als nachteilig wird außerdem angesehen, daß beim Brennen der Zementklinker zusätzlich noch Gips als Schwefeldonator zugegeben werden muß, was mit einem zusätzlichen Rohstoffbedarf sowie Steuerungsaufwand verbunden ist. Um diesem Problem zu begegnen, wird zum Teil bereits Petrolkoks als Primärbrennstoff eingesetzt, der geologieabhängig einen Schwefelgehalt von 3 bis 4 % besitzt, welcher bei der Verbrennung freigesetzt wird. Petrolkoks mit einem solchen Schwefelgehalt ist jedoch nur begrenzt erhältlich.

Des weiteren ist es beispielsweise aus der DE 43 03 170 A1 bekannt, zur Verringerung des erforderlichen Primärbrennstoffbedarfs sogenannte Sekundärbrennstoffe in der Form von Abfallstoffen zu verbrennen.

Aufgabe der Erfindung ist es, ein Verfahren zu schaffen, mit dem endothermisch ablaufende chemische Reaktionen, wie beispielsweise das Brennen von Zement, in einfacher Weise gesteuert werden können.

Diese Aufgabe ist erfindungsgemäß dadurch gelöst, daß Sekundärbrennstoffe verwendet werden, die einen Teil der Ausgangsstoffe für die Reaktion enthalten und diese bei der Verbrennung freisetzen.

Der Erfindung liegt somit die generelle Überlegung zugrunde, Sekundärbrennstoffe einzusetzen, die mit solchen chemischen Stoffen in gebundener oder ungebundener Form angereichert sind, die für die zu steuernde chemische Reaktionen benötigt werden und bei der Verbrennung Sekundärbrennstoffe freigesetzt werden.

Durch gezielte Steuerung der Sekundärbrennstoffzufuhr in der Brennkammer, die insbesondere auch kontinuierlich erfolgen kann, ist es dann möglich, die Menge an Ausgangsstoffen, die für die gewünschte Reaktion erforderlich ist, zu erzeugen.

Für das Brennen von Zement werden dann Sekundärbrennstoffe verwendet, die mit Schwefel angereichert sind, der bei der Verbrennung freigesetzt wird. Auf diese Weise kann auf die Zudosierung von Gips und dem damit verbunden Aufwand verzichtet werden. Es ist lediglich erforderlich, die Zufuhr des angereicherten Sekundärbrennstoffes in den Brennofen zu steuern.

Das erfindungsgemäße Verfahren ist somit hervorragend für den Vorgang des Zementbrennens einsetzbar. Grundsätzlich ist es aber in allen Bereichen anwendbar, in denen eine chemische Reaktion unter Wärmezufuhr stattfindet und der Reaktion noch kontinuierlich Ausgangsstoffe zugeführt werden müssen. Hierzu zählen Anwendungen in allen Schmelzprozessen wie z.B. in Hoch- und Kupolöfen, LD-Konvertern und natürlich auch in Sinteranlagen, also überall dort, wo durch Freisetzung von Verbrennungswärme zwangsläufig das vorher beigegebene chemische Element sich im Brenn- bzw. Schmelzgut im gewünschten Maße verteilt und aufgenommen wird.

## Patentansprüche

1. Verfahren zur Steuerung von endothermischen chemischen Reaktionen, bei dem die Wärme für die Reaktion durch Verbrennung von Sekundärbrennstoffen erzeugt wird, **dadurch gekennzeichnet, daß** Sekundärbrennstoffe verwendet werden, die einen Teil der Ausgangsstoffe für die Reaktion enthalten und diese bei der Verbrennung freisetzen.

2. Verfahren nach Anspruch 1, **dadurch gekennzeichnet, daß** für die Herstellung von Zement Sekundärbrennstoffe eingesetzt werden, denen 3 bis 4 % Schwefel zugesetzt ist.

3. Verfahren nach Anspruch 1 oder 2, **dadurch gekennzeichnet, daß** die Reaktion in einer Brennkammer insbesondere eines Drehtrommelofens stattfindet und die Sekundärbrennstoffe der Brennkammer kontinuierlich zugeführt werden.
